Europäisches Patentamt

European Patent Office

Office européen des brevets

(11) Veröffentlichungsnummer: **0 449 395 A1**

## (12) EUROPÄISCHE PATENTANMELDUNG

(21) Anmeldenummer: 91250022.0

(22) Anmeldetag: 30.01.91

(51) Int. Cl.⁵: **F16L 11/115**, F16L 33/01

(30) Priorität: 23.02.90 DE 9002309 U

(43) Veröffentlichungstag der Anmeldung:
02.10.91 Patentblatt 91/40

(84) Benannte Vertragsstaaten:
**BE CH DE FR GB IT LI NL**

(71) Anmelder: **CHR. BERGHÖFER GmbH & CO. KG., METALLSCHLAUCH- UND KOMPENSATORENFABRIK**
**Frankfurter Strasse 199**
**W-3500 Kassel(DE)**

(72) Erfinder: **Boden, Kurt J.**
**Amselweg 2**
**W-3501 Habichtswald(DE)**
Erfinder: **Bürger, Stefan**
**Naumburger Strasse 35**
**W-3507 Baunatal 2(DE)**

(74) Vertreter: **Maikowski, Michael, Dipl.-Ing. Dr. et al**
**Patentanwälte Maikowski & Ninnemann**
**Xantener Strasse 10**
**W-1000 Berlin 15(DE)**

(54) **Wendelgewellter Schlauch.**

(57) Spiral - oder wendelgewellter Schlauch (1) aus einem elastischen Material, insbesondere PTFE, gekennzeichnet durch ein in die Wellentäler (2) des Schlauches eingelegtes Seil.(3)

EP 0 449 395 A1

Die Erfindung betrifft einen Spiral- oder wendelgewellten Schlauch nach dem Oberbegriff des Anspruchs 1.

Es ist bekannt, spiral- oder wendelgewellte Schläuche aus einem PTFE-Rohr dadurch herzustellen, daß auf dieses eine Edelstahlspirale aufgewickelt wird. Dabei entsteht zunächst eine flache Welle, die dann in einem zweiten Arbeitsschritt vertieft werden kann. Die Edelstahldrahtspirale besteht aus einem einzigen Volldraht, der infolge seines Durchmessers und des Elastizitätsmoduls des Werkstoffes steif ist. Für flachgewellte Schläuche kann die Steifheit dieser Volldrahtspirale vorteilhaft sein, wenn der vollkreisförmige Querschnitt des Schlauches aufrechterhalten und diesem eine Steifheit verliehen werden soll. Wenn das Ende eines derartigen Schlauches mit einer Anschlußarmatur verbunden werden soll, treten erhebliche Nachteile auf. Wird die Edelstahldrahtspirale nicht in die Anschlußarmatur mit eingeführt, kann das Ende dieser Edelstahldrahtspirale den Schlauch beschädigen. Dieses Ende kann sich durch den Schlauchwerkstoff hindurch drücken. Wird die Edelstahldrahtspirale in die Anschlußarmatur mit eingeführt, so muß diese Anschlußarmatur in entsprechender Weise vorbearbeitet und mit einer axialen Bohrung oder einer radialen Bohrung ausgerüstet werden. An diesen Bohrungen muß die Edelstahldrahtspirale abgebogen und durch einen Teil der Länge des Schlauchstutzens geführt und dann in die Bohrung eingehakt werden. Zur sicheren Gestaltung einer derartigen Verbindung muß das Ende der Edelstahldrahtspirale noch durch Körnen oder Setzen eines Schweißpunktes festgelegt werden.

Der vorliegenden Erfindung liegt die Aufgabe zugrunde, für einen tiefgewellten Schlauch aus einem Werkstoff mit niedrigem Elastizitätsmodul, insbesondere aus PTFE eine Stütze für diejenigen Fälle zu schaffen, in denen die Stabilität der Wellen des tiefgewellten Schlauches nicht ausreicht. Bei tiefgewellten Schläuchen dieser Art ist ein Rundhalten des Querschnittes im allgemeinen nicht erforderlich, da die Tiefe der Wellung eine ausreichende Steife gegen eine ovale Auswölbung des Querschnitts mit sich bringt.

Der Erfindung liegt die Aufgabe zugrunde, eine Stütze für derartige spiral- oder wendelgewellte Schläuche zu schaffen, wobei die Einführung eines Schlauchendes in eine Anschlußarmatur in einfachster Weise durchführbar sein soll.

Erfindungsgemäß wird diese Aufgabe dadurch gelöst, daß in die Wellentäler des Schlauches ein Seil eingelegt ist.

Mit Vorteil ist das Seil aus metallischen Einzeldrähten oder Polymermono- oder multifilamenten gebildet.

Dieses, insbesondere von außen, in die Wellentäler des Schlauches eingelegte Seil bringt den Vorteil mit sich, daß die hohe Flexibilität des Schlauches aufrechterhalten wird, denn der Schlauch wird durch das Einlegen des Seiles nur unwesentlich steifer. Mit Vorteil ermöglicht das in die Wellentäler eingelegte Seil eine hohe Belastung durch Dauerbiegung. Dies ist dadurch möglich, daß das Seil wesentlich geringere Ermüdungserscheinungen aufweist als eine Volldrahtspirale.

Mit Vorteil ist der Schlauch von einer Schutzumhüllung, insbesondere einem Geflecht umgeben.

Mit besonderem Vorteil ist zumindest ein Schlauchende in einer Anschlußarmatur mit oder ohne Schutzumhüllung eingesetzt. Besonders vorteilhaft ist dabei, daß in der Anschlußarmatur das Seil in seine Einzeldrähte oder Filamente, die auf den Schlauchstutzen aufgelegt sind, aufgespleißt ist. Dabei sind die auf den Schlauchstutzen aufgelegte Einzeldrähte oder Filamente zusammen mit dem Geflecht des Schlauches, wahlweise auch ohne dieses, zusammen mit der üblichen Preßhülse ver-preßt. Ein Bohren, Abknicken und nachträgliches Sichern der Schlauchstütze entfällt.

Die spiral- oder wendelgewellten Schläuche aus einem elastischen Material, insbesondere aus PTFE werden in einem thermischen Verfahren aus Rohr hergestellt. Bei diesem Verfahren wird eine entsprechende Wandung in das PTFE-Rohr von außen nach innen eingeformt, so daß eine spiralförmige Welle entsteht. Die so hergestellte Welle ist tief und bewirkt eine große Flexibilität des Schlauches sowie volle Vakuumbeständigkeit. Der gewellte Schlauch wird auf Längen zugeschnitten, mit Anschlüssen versehen und als einbaufertiges Produkt in den Handel gebracht. In den meisten Fällen wird zur Erhöhung der Druckfestigkeit eine Umflechtung vorgesehen. Die erfindungsgemäße Ausbildung des spiral- oder wendelgewellten Schlauches bei dem in die Wellentäler des Schlauches ein Seil eingelegt ist erhöht die Stabilität der Wellen, insbesondere bei Einsätzen des Schlauches bei Temperaturen, die in der Größenordnung der Formtemperatur des Schlauches liegen. Die erfindungsgemäße Ausführungsform des spiral- oder wendelgewellten Schlauches ermöglicht mit Vorteil auch dessen Einsatz bei starken und dauernden Biegebelastungen sowie bei pulsierenden Belastungen durch Wechsel des Innendruckes.

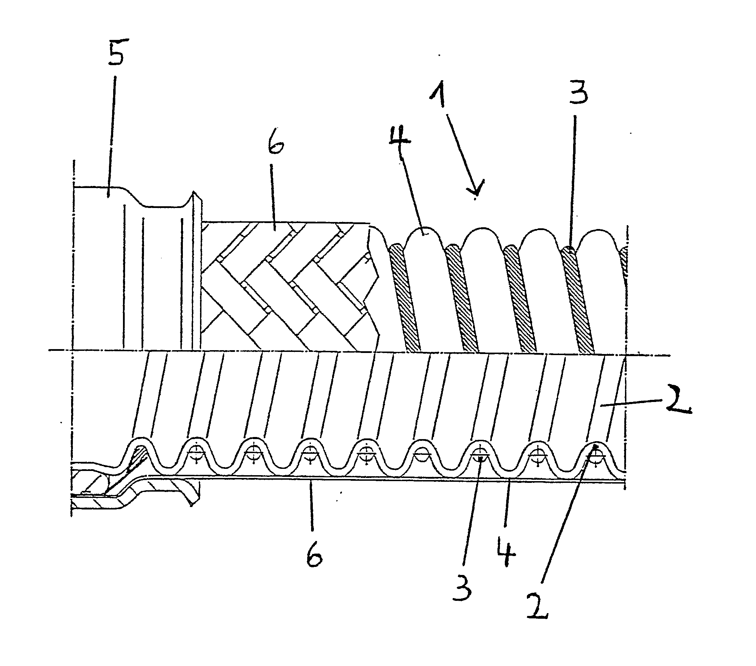

Ein Ausführungsbeispiel der Erfindung soll unter Bezugnahme auf die Zeichnung erläutert werden, die das Ende eines spiral- oder wendelgewellten Schlauches darstellt, welches mit einer Anschlußarmatur ausgerüstet ist. Die Figur zeigt Teile des Schlauches, des Geflechts und der Armatur und gleichzeitig eine Schnittansicht.

Im rechten und unteren Abschnitt der Zeichnung ist ein spiral- oder wendelgewellter Schlauch 1 dargestellt, der Wellentäler 2 und Wellenkämme 4 aufweist. Beim dargestellten Ausführungsbeispiel werden die Wellenkämme 4 von einem Geflecht 6 eingehüllt. Der Schlauch 1 ist mit dem Geflecht 6 in eine Anschlußarmatur 5 eingeführt und in dieser festgeklemmt.

In die Wellentäler 2 des spiral- oder wendelgewellten Schlauchs 1 ist ein Seil 3 eingelegt. Dieses Seil 3 besteht aus metallischen Einzeldrähten oder Mono- oder Multifilamenten aus Kunststoff.

Innerhalb der Anschlußarmatur 5 ist das Seil 3 aufgespleißt und die aufgespleißten Enden des Seiles sind auf den Schlauchstutzen gelegt und werden zusammen, beim dargestellten Ausführungsbeispiel mit dem Geflecht des Schlauches mit der üblichen Preßhülse verpreßt.

**Patentansprüche**

1.  Spiral - oder wendelgewellter Schlauch aus einem elastischen Material, insbesondere PTFE,

    gekennzeichnet durch

    ein in die Wellentäler (2) des Schlauches (1) eingelegtes Seil (3).

2.  Spiral- oder wendelgewellter Schlauch nach Anspruch 1,

    dadurch gekennzeichnet, daß

    das Seil (3) aus metallischen Einzeldrähten oder Polymermono- oder multifilamenten gebildet ist.

3.  Spiral- oder wendelgewellter Schlauch nach mindestens einem der Anspruch 1 oer 2,

    dadurch gekennzeichnet, daß

    der Schlauch (1) von einer Schutzumhüllung (6) umgeben ist.

4.  Spiral- oder wendelgewellter Schlauch nach mindestens einem der Ansprüche 1 bis 3,

    dadurch gekennzeichnet, daß

    zumindest ein Schlauchende in eine Anschlußarmatur (5) eingesetzt ist.

5.  Spiral- oder wendelgewellter Schlauch nach Anspruch 4,

    dadurch gekennzeichnet, daß

    in der Anschlußarmatur (5) das Seil (3) in seine Einzeldrähte oer Filamente, die auf den Schlauchstützen aufgelegt sind, aufgespleißt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-8 617 70 (SUPERFLEXIT LTD) * Figuren 1-3; Seite 1, Zeilen 50-65; Seite 3, Zeilen 21-55 * | 1,3,4 | F 16 L 11/115 F 16 L 33/01 |
| Y | | 2 | |
| | – – – | | |
| X | EP-A-0 104 835 (STANDARD HOSE LTD) * Figuren 1,4; Ansprüche 1,3,4,9; Seite 3, Zeilen 13-19; Seite 4, Zeilen 15-29 * | 1-4 | |
| | – – – | | |
| Y | US-A-1 345 971 (STAR) * Figuren 1,4; Anspruch 2 * | 2 | |
| | – – – | | |
| A | US-A-3 857 415 (MORIN & McNEIL) * Figur 1; Säule 4, Zeilen 54-60 * | 1,2 | |
| | – – – – – | | |

| RECHERCHIERTE SACHGEBIETE (Int. Cl.5) |
|---|
| F 16 L |

**Der vorliegende Recherchenbericht wurde für alle Patentansprüche erstellt**

| Recherchenort | Abschlußdatum der Recherche | Prüfer |
|---|---|---|
| Den Haag | 21 Mai 91 | BUDTZ-OLSEN A. |